# EUROPEAN PATENT APPLICATION

(11) **EP 4 794 065 A1**
(43) Date of publication of application: **19.08.2026**
(21) Application number: 26152902.8
(22) Date of filing: 20.01.2026
(51) Int. Cl.: H01M 50/103, H01M 50/15, H01M 50/176, H01M 50/548, H01M 50/553, H01M 50/107, H01M 50/152, H01M 50/179, H01M 50/559

(54) **RECHARGEABLE BATTERY AND METHOD OF MANUFACTURING THE SAME**

(30) Priority: 14.02.2025 KR 20250019742
(71) Applicant: SAMSUNG SDI CO., LTD., Yongin-si, Gyeonggi-do 17084 (KR)
(72) Inventor: Hwang, Youngjin, Yongin-si, Gyeonggi-do 17084 (KR)
(74) Representative: Meissner Bolte Partnerschaft mbB

(57) **Abstract**

A manufacturing method for a rechargeable battery (1), the manufacturing method including manufacturing a case (10) having an opening on a first side, inserting an electrode assembly (30) into the case (10) through the opening, and coupling a cap assembly (50) to the first side, wherein manufacturing the case (10) includes manufacturing a first intermediate material (10') having an internal accommodation space (11) and an open first side, manufacturing a second intermediate material (10") by forming a plurality of holes (1130) on a second side opposite to the first side of the first intermediate material (10'), and coupling a first electrode terminal (150) to the second side of the second intermediate material (10").

## Description

### BACKGROUND

### 1. Field

The present invention relates to a rechargeable battery and a method for manufacturing the same.

### 2. Description of the Related Art

A rechargeable battery with a side terminal is manufactured in such a way that an electrode cap assembly is coupled to opposite sides of a case having an open shape on opposite sides, accommodating the electrode assembly.

That is, the rechargeable battery is manufactured by manufacturing the electrode cap assembly separately, manufacturing the case separately, inserting the electrode assembly into the case, and then coupling the electrode cap assembly to the opposite sides of the case.

The above-described information disclosed in the background technology of this invention is only for improving understanding of the background of the present invention, and therefore may include information that does not constitute prior art.

### SUMMARY

According to the present invention a manufacturing method for a rechargeable battery includes manufacturing a case having an opening on a first side, inserting an electrode assembly into the case through the opening, and coupling a cap assembly to the first side, wherein manufacturing the case includes manufacturing a first intermediate material having an internal accommodation space and an open first side, manufacturing a second intermediate material by forming a plurality of holes on a second side opposite to the first side of the first intermediate material, and coupling a first electrode terminal to the second side of the second intermediate material.

Manufacturing the first intermediate material may include inserting a case raw material into a first die, and applying pressure with a first punch.

Manufacturing the first intermediate material may include performing a deep drawing method.

Manufacturing the second intermediate material may include fixing the first intermediate material to a second die, and pressing the second side of the first intermediate material with a second punch including a plurality of protrusions.

Sizes of the plurality of protrusions may correspond to sizes of the plurality of holes.

Forming the plurality of holes may include forming a main hole, and a sub hole positioned near the main hole.

A size of the main hole may be greater than a size of the sub hole.

The sub hole may include multiple sub holes, and the multiple sub holes may be arranged in a radial direction based on the main hole.

The plurality of holes may further include an electrolyte injection port.

Manufacturing the first intermediate material and manufacturing the second intermediate material may be performed together.

Applying pressure with the first punch may include applying pressure with the first punch having a plurality of protrusions.

The second side of the second intermediate material may have a first surface facing the accommodation space and a second surface opposite to the first surface, and coupling the first electrode terminal may include positioning the first electrode terminal spaced apart on the second surface, injecting a molten first connecting member between the first electrode terminal and the second surface through the sub hole, and solidifying the molten first connecting member.

Injecting the molten first connecting member may include injecting the molten first connecting member in a direction from the first surface toward the second surface through an injection device introduced from a first side of the second intermediate material.

Inserting the electrode assembly may include inserting the electrode assembly having a stack structure with a separator between a first electrode and a second electrode, and the electrode assembly may include a first electrode tab and a second electrode tab respectively protruding from the first electrode and the second electrode, and a first current collector plate and a second current collector plate electrically connected to the first electrode tab and the second electrode tab, respectively.

Inserting the electrode assembly may include inserting the electrode assembly into the case such that the second current collector plate faces the first side of the case.

According to the present invention a rechargeable battery includes a case having an opening on a first side, an electrode assembly in the case through the opening, the electrode assembly including a first electrode, a second electrode, and a separator between the first electrode and the second electrode, and a cap assembly coupled to the first side, wherein the case includes a base portion on a second side opposite to the first side, the base portion having a main hole, an extension extending in a direction toward a second side of the case from an edge of the base portion, a first electrode terminal on the base portion, and a first connecting member between the first electrode terminal and the base portion.

The first connecting member may have an electrical insulation property.

The first connecting member may include polyphenylene sulfide.

The base portion and the extension may be a single unit, the cap assembly may include a second electrode terminal, and the extension and the cap assembly may be connected by a weld.

The electrode assembly may further include a plurality of first electrode tabs electrically connected to the first electrode, the plurality of first electrode tabs protruding toward the base portion, a first current collector plate electrically connected to the plurality of first electrode tabs, a plurality of second electrode tabs electrically connected to the second electrode, the plurality of second electrode tabs protruding toward the cap assembly, and a second current collector plate electrically connected to the plurality of second electrode tabs, and the first current collector plate is electrically connected to the first electrode terminal through the main hole.

### BRIEF DESCRIPTION OF THE DRAWINGS

Features will become apparent to those of ordinary skill in the art by describing in detail exemplary embodiments with reference to the attached drawings, in which:
FIG. 1 illustrates a perspective view of a rechargeable battery according to an embodiment of the present invention;
FIG. 2 illustrates a perspective view of a rechargeable battery at a different time point from that of FIG. 1;
FIG. 3 illustrates a cross-sectional view taken along a line III-III of the rechargeable battery shown in FIG. 1.
FIG. 4 illustrates a flowchart for describing a manufacturing method for a rechargeable battery according to an embodiment of the present invention;
FIG. 5 illustrates a flowchart describing detailed operations of manufacturing the case of FIG. 4;
FIG. 6 illustrates a view for describing a forming operation of FIG. 5;
FIG. 7 illustrates a view for describing a piercing operation of FIG. 5;
FIG. 8 illustrates a view for describing a piercing operation according to the embodiment of FIG. 7 and another embodiment; and
FIG. 9 illustrates a view for describing a coupling operation of FIG. 5.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Additionally, when used herein, "comprise," "include," "comprising," and/or "including" specifies the presence of the mentioned figures, numbers, steps, actions, members, elements and/or groups of these, and does not exclude the presence or addition of one or more other shapes, numbers, operations, members, elements and/or groups. The use of "can/may" in describing an embodiment of the present invention indicates "at least one embodiment of the present invention."

Stating that two objects of comparison are 'the same' means that they are 'substantially the same'. Therefore, substantially identical may include a deviation that is considered low in the art, for example, a deviation of less than 5%. Additionally, uniformity of a parameter in a certain region may mean uniformity from an average perspective.

Although the first, second, etc. are used to describe various components, these components are not limited by these terms. These terms are only used to distinguish one component from another component, and unless specifically stated to the contrary, the first component may also be a second component.

Throughout the specification, unless otherwise stated, each component may be singular or plural.

Disposition of any component to the "upper (or lower) portion" of the component or to the "upper (or lower)" portion of the component may indicate that not only is an arbitrary component disposed in contact with the upper (or lower) surface of the component, but also other components may be interposed between the component and any component disposed on (or under) the component.

Additionally, if a component is described as "connected to" or "coupled to" another component; the above components may be directly connected or connected to each other, but it should be understood that other components may be "interposed" between each component, or that each component may be "connected," "combined," or "connected" through other components. Throughout this specification and the claims that follow, when it is described that an element is "coupled" to another element, the element may be "directly coupled" to the other element or "electrically coupled" to the other element through a third element.

Whenever reference is made throughout the specification to "A and/or B," this means A, B, or A and B, unless otherwise specified. That is, "and/or" includes all or any combination of the listed items. When referring to "C to D," this means C or higher and D or lower, unless specifically stated to the contrary.

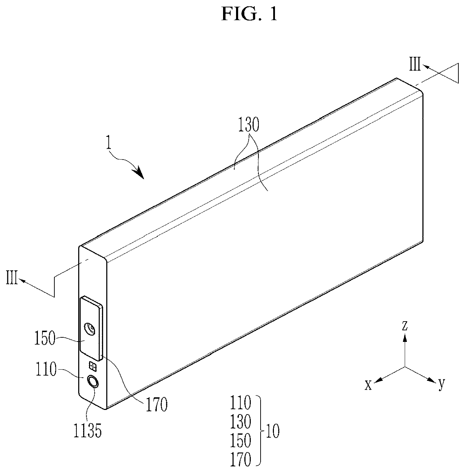

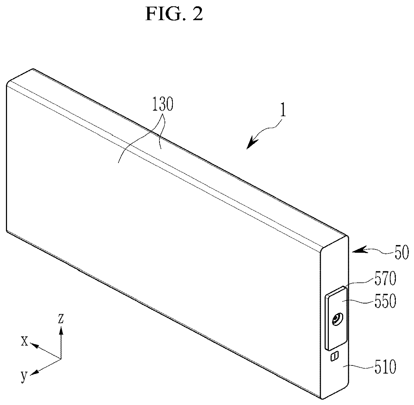

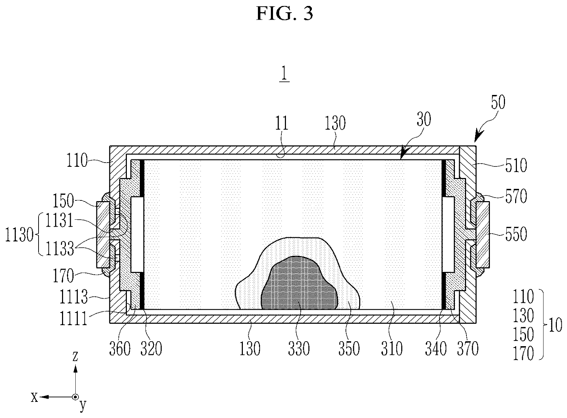

FIG. 1 illustrates a perspective view of a rechargeable battery 1 according to an embodiment of the present invention, FIG. 2 illustrates a perspective view of a rechargeable battery at a different time point from that of FIG. 1, and FIG. 3 illustrates a cross-sectional view taken along a line III-III of the rechargeable battery 1 shown in FIG. 1.

In FIG. 2, a first side of the rechargeable battery 1 may be observed, while in FIG. 1, a second side, opposite to the first side, may be observed. The first side of the rechargeable battery 1 may refer to a -X axis direction in reference to FIGS. 1 to 3, while the second side of the rechargeable battery 1 may refer to a +X axis direction in the same reference.

Referring to FIGS. 1 to 3, the rechargeable battery 1 according to an embodiment of the present invention may include a case 10 with a first side open, and an electrode assembly 30 accommodated in the case 10. A first side of the case 10 may face the same direction (left direction based on FIG. 3) as that of the first side of the rechargeable battery 1. For example, the case 10 may have an opening on the first side such that the first side is enabled to be open.

The case 10 may be made of a metallic material. For example, the case 10 may be made of a metal such as aluminum, an aluminum alloy, nickel-plated steel, etc.

The case 10 may include a base portion 110 positioned on the second side opposite to the open first side and an extension 130 extending in a direction toward the second side from an edge of the base portion 110. A second side of the case 10 may face the same direction (right direction based on FIG. 3) as that of the second side of the rechargeable battery 1. The case 10 may have an accommodation space 11 therein.

The base portion 110 may be formed integrally with the extension 130. The base portion 110 and the extension 130 may have a single continuous shape, improving strength and air-tightness. In addition, there is no joint between the base portion 110 and the extension 130, so even if stress is concentrated between two components, it may be easily prevented from being broken.

Furthermore, the base portion 110 and the extension 130 may be formed of a same material, allowing consistent thermal stability and chemical durability, thereby enhancing reliability of the case 10 by preventing issues such as thermal deformation during a process of connecting the two components.

The base portion 110 may have a first surface 1111 facing a first side or the accommodation space 11 of the case 10 and a second surface 1113 opposite to the first surface 1111. The first surface 1111 may contact a first current collector plate 360, which will be described later, and a first electrode terminal 150 may be positioned on the second surface 1113.

The case 10 may further include the first electrode terminal 150 and a first connecting member 170 arranged on the base portion 110. The first connecting member 170 may be positioned between the first electrode terminal 150 and the second surface 1113. The first electrode terminal 150 may be in contact with the first current collector plate 360 described later, and may have a same polarity as that of the first current collector plate 360.

The first connecting member 170 may be a material having an electrical insulating property. The first connecting member 170 may be made of plastic. For example, the first connecting member 170 may include polyphenylene sulfide (PPS). The base portion 110 may have a plurality of holes 1130 extending through the first surface 1111 and the second surface 1113. The holes 1130 may include a main hole 1131 and a sub hole 1133 positioned near the main hole 1131.

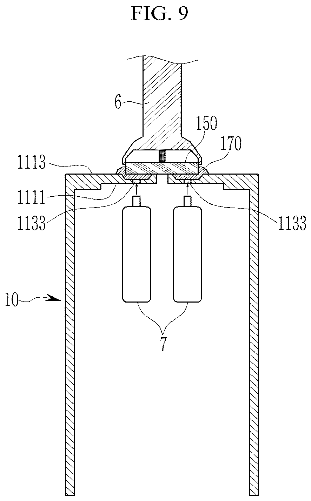

Through the main hole 1131, the first electrode terminal 150, and the first current collector plate 360 may be electrically connected to each other. Through the sub hole 1133, the first connecting member 170 in a molten state may be injected between the first electrode terminal 150 and the base portion 110 by an injection device 7 (see FIG. 9). For example, the first connecting member 170 may be provided between the first electrode terminal 150 and the base portion 110 by insert injection.

The first connecting member 170 may fill the space between the first electrode terminal 150 and the second surface 1113 of the base portion 110 in the molten state. When the first connecting member 170 fills the space in the molten state, it may provide a wider contact area for the first electrode terminal 150 and the second surface 1113 of the base portion 110 than when in a solid state. When the first connecting member 170 in the molten state solidifies, it may provide a stronger adhesive force to the first electrode terminal 150 and the second surface 1113 of the base portion 110.

There may be multiples of the sub holes 1133, and they may be arranged radially based on the main hole 1131 (e.g., radially out and separate from the main hole 1131). In this case, the first connecting member 170 may be injected at various points, allowing for even injection over a wider area. Accordingly, a more uniform adhesive layer may be provided between the first electrode terminal 150 and the second surface 1113, and the adhesive force may be improved over the entire bonding surface. Additionally, this may contribute to increasing bonding strength and enhancing durability against thermal and mechanical loads.

The rechargeable battery 1 may further include a second electrode cap assembly 50 coupled to the open first side of the case 10. A method of coupling the electrode assembly 30 and the second electrode cap assembly 50 may rely on a method designed for joining metallic materials. For example, the electrode assembly 30 and the second electrode cap assembly 50 may be coupled by welding.

The second electrode cap assembly 50 may include a cap plate 510, a second electrode terminal 550 positioned thereon, and a second connecting member 570 provided between the cap plate 510 and the second electrode terminal 550.

The second connecting member 570 may have an electrical insulating property, and may be made of a same material as that of the first connecting member 170. The second electrode terminal 550 may be electrically connected to a second current collector plate 370. Accordingly, the second electrode terminal 550 may have a same polarity as that of the second electrode 330.

The electrode assembly 30 may include a first electrode 310, a second electrode 330, and a separator 350 positioned therebetween. The electrode assembly 30 may have a structure in which the first electrode 310, the separator 350, and the second electrode 330 are stacked.

For example, the electrode assembly 30 may be a stacked type in which the separator 350 is provided between the first electrode 310 and the second electrode 330, or it may be a jelly-roll type wound around a winding center axis (e.g., X-axis) in the wound state. In the present invention, the electrode assembly 30 is assumed to be of the stacked type, and a description hereinafter proceeds based on this assumption.

Each of the first electrode 310 and the second electrode 330 may be either a positive electrode or a negative electrode, and the first electrode 310 and the second electrode 330 may have different polarities. For example, if the first electrode 310 serves as the negative electrode, the second electrode 330 may serve as the positive electrode, and if the first electrode 310 serves as the positive electrode, the second electrode 330 may serve as the negative electrode. In the present invention, it is assumed that the first electrode 310 serves as the positive electrode, and the second electrode 330 serves as the negative electrode, and a description hereinafter proceeds based on this assumption.

The positive electrode may include a positive electrode composite layer in which a positive electrode active material (e.g., transition metal oxide such as LiCoO₂, LiNiO₂, LiMn₂O₄, etc.) is coated onto a positive electrode current collector, and the negative electrode may include a negative electrode composite layer in which a negative electrode active material (e.g., graphite, carbon, etc.) is coated onto a negative electrode current collector. The negative collector plate may be a copper (Cu) foil, and the positive collector plate may be an aluminum (Al) foil, but a material of each collector plate may vary.

The separator 350 may block contact between the first electrode 310 and the second electrode 330 to prevent electrical short-circuiting and allow the movement of ions (e.g., lithium (Li) ions). The separator 350 may be formed of a polyethylene (PE) film, a polypropylene (PP) film, or the like.

The electrode assembly 30 may further include a first electrode tab 320 electrically connected to the first electrode 310 and a second electrode tab 340 electrically connected to the second electrode 330.

The first electrode tab 320 and the second electrode tab 340 may be configured separately from the first electrode 310 and the second electrode 330, or may be uncoated regions (e.g., current collectors without an active material layer applied) protruding from the first electrode 310 and the second electrode 330.

In the present invention, the first electrode tab 320 may function as a positive electrode tab and may be made of aluminum (Al), and the second electrode tab 340 may function as a negative electrode tab and may be made of copper (Cu) or nickel (Ni).

The first electrode tab 320 may protrude from the first electrode 310 in a direction toward the base portion 110 or the second side of the case 10, and the second electrode tab 340 may protrude from the second electrode 330 in a direction toward the second electrode cap assembly 50 or a first side. However, the protrusion direction of the first electrode tab 320 and the second electrode tab 340 may be opposite to the above-mentioned direction.

There may be a plurality of the first electrode tab 320 and a plurality of the second electrode tab 340. The electrode assembly 30 may further include a first current collector plate 360 in contact with the plurality of the first electrode tab 320 and a second current collector plate 370 in contact with the plurality of the second electrode tab 340.

The first current collector plate 360 may contact the first electrode terminal 150 through the main hole 1131 of the base portion 110, while the second current collector plate 370 may contact the second electrode terminal 550. In the present invention, the first electrode terminal 150 may function as the positive electrode, while the second electrode terminal 550 may function as the negative electrode.

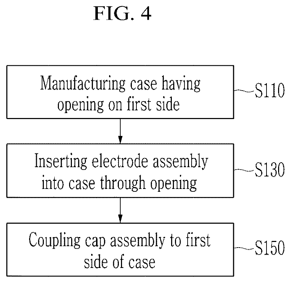

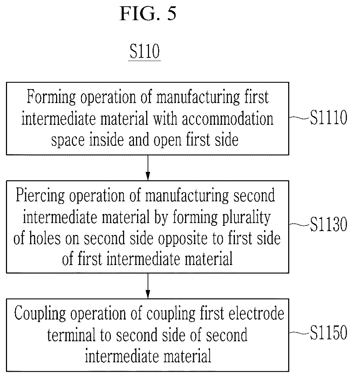

FIG. 4 illustrates a flowchart for describing a manufacturing method for a rechargeable battery according to an embodiment of the present invention. Referring to FIG. 4, the manufacturing method for the rechargeable battery may include an operation (S110) of manufacturing a case having an opening on a first side. A detailed description of the case manufacturing operation (S110) will be described later with reference to FIGS. 5 to 9.

The manufacturing method for the rechargeable battery may further include an operation (S130) of inserting an electrode assembly into a case through an opening. The electrode assembly to be inserted has a stack structure with a separator proposed between the first electrode and the second electrode, and may include a first electrode tab and a second electrode tab protruding from the first electrode and the second electrode, respectively, and a first current collector plate and a second current collector plate electrically connected to these tabs, respectively.

The electrode assembly may be inserted into the case such that the first current collector plate faces a second side of the case and the second collector plate faces a first side. The base portion may be positioned on the second side, opposite to the first side of the case, such that the first current collector plate may face the base portion.

The manufacturing method for the rechargeable battery may further include an operation (S150) of coupling a cap assembly to the first side of the case. The cap assembly to be coupled may be a second electrode cap assembly including a second electrode terminal.

The second electrode cap assembly may be positioned on the open first side of the case and coupled to the case through a metal-joining method such as welding. The electrode assembly may be isolated from the outside by coupling of the case and the second electrode cap assembly.

The electrode assembly may be accommodated within the case such that the second current collector plate of the electrode assembly faces the second electrode cap assembly. The first current collector plate of the electrode assembly housed within the case may contact the first electrode terminal, and the second current collector plate may contact the second electrode terminal. Accordingly, the first electrode terminal may have a same polarity as that of the first electrode, and the second electrode terminal may have a same polarity as that of the second electrode.

FIG. 5 illustrates a flowchart describing detailed operations S110 of manufacturing the case of FIG. 4, and FIG. 6 and FIG. 9 illustrate views for describing each operation described in FIG. 5 in detail.

Referring to FIG. 5, the operation S110 of manufacturing the case may include a forming operation (S1110) of manufacturing a first intermediate material 10' with an accommodation space 11 inside and an open first side, a piercing operation (S1130) of manufacturing a second intermediate material 10" by forming a plurality of holes 1130 on the second side of the first intermediate material 10' opposite to the first side, and a coupling operation (S1150) to couple the first electrode terminal 150 to the second side of the second intermediate material 10".

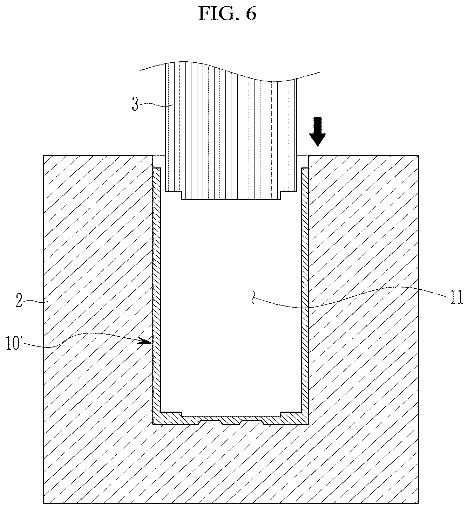

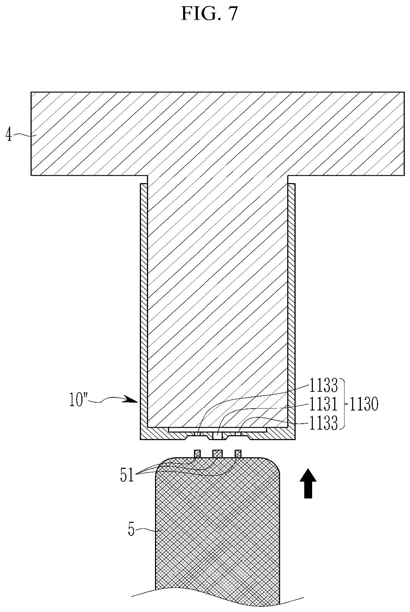

FIGS. 6 through 9 specifically illustrate the forming operation (S1110), the piercing operation (S1130), a piercing operation (S1130') according to a different embodiment from the embodiment of FIG. 7, and the coupling operation (S1150), respectively.

Referring to FIGS. 5 and 6, the forming operation (S1110) may be performed by inserting a case raw material into the first die 2 and then applying pressure with the first punch 3. The case raw material may refer to a metal such as aluminum, an aluminum alloy, and nickel-plated steel, as mentioned above.

The first die 2 may have a hollow space, and the case raw material may be inserted into a hollow space. The first punch 3 may be positioned on the first die 2, and may move through the hollow space. The first punch 3 may pressurize the case raw material in a direction in which the case raw material is inserted (from top to bottom as shown in FIG. 6).

The case raw material pressurized by the first punch 3 may be deformed in shape to fill a space between the first punch 3 and the first die 2. When sufficient pressurization is achieved, a pressurization state may be released by moving the first punch 3 in an opposite direction to the pressurization direction (from bottom to top in FIG. 6).

Accordingly, the case raw material may be manufactured into the first intermediate material 10' having a same shape as that of a space between the first punch 3 and the first die 2 under pressure. The accommodation space 11 having a same shape as that of the first punch 3 may be provided inside the first intermediate material 10'. For example, the first intermediate material 10' may be manufactured by a deep drawing method.

Referring to FIGS. 5 and 7, the piercing operation (S1130) may be performed by fixing the first intermediate material 10' to the second die 4 and then pressing a second side of the first intermediate material 10' with a second punch 5 including a plurality of protrusions 51. In this way, the second intermediate material 10" provided with a plurality of holes 1130 on a second side may be manufactured.

The holes 1130 may include a main hole 1131 and a sub hole 1133 positioned near the main hole 1131. Sizes of the main hole 1131 and the sub hole 1133 may be different. For example, the size of the main hole 1131 may be greater than the size of the sub hole 1133. The protrusions 51 of the second punch 5 may have sizes corresponding to the holes 1130 (e.g., the protrusion sizes fit in the holes or are equal to sizes of the holes) in the second intermediate material 10", and sizes of the protrusions 51 may differ from one another.

The manufacturing method for the rechargeable battery according to an embodiment of the present invention may simplify the manufacturing process by omitting the operation of cutting the second side of the case and instead adopting a method of directly creating the multiples of the holes 1130 on the second side of the case, thereby reducing a manufacturing time and cost.

Moreover, the holes 1130 may include an electrolyte injection port 1135 (see FIG. 1). In other words, in the piercing operation (S1130), the electrolyte injection port 1135 may be provided on the second side of the second intermediate material 10".

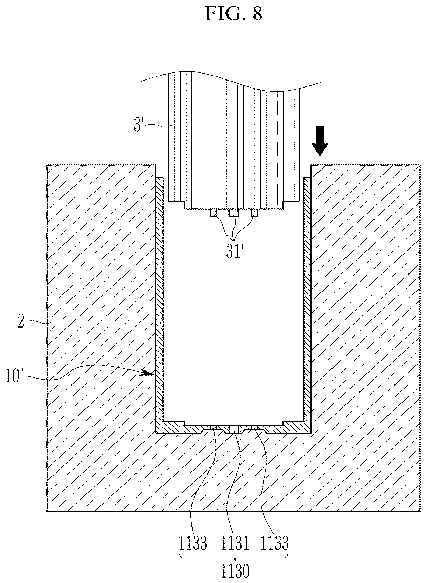

Referring to FIGS. 5 and 8, the piercing operation (S1130) may be performed together with the forming operation (S1110). In other words, according to the piercing operation (S1130') of another embodiment of the present invention, the piercing operation (S1130) and the forming operation (S1110) may be performed using the same die and punch.

The first punch 3' according to another embodiment of the present invention may include a plurality of protrusions 31', and in this case, when the first punch 3' presses a raw material of the case, the raw material may be formed into a shape similar to that of the first intermediate material 10' (see FIG. 6) while being processed into the second intermediate material 10" with multiples of the holes 1130 on the second side.

When the piercing operation (S1130) and the forming operation (S1110) are performed together, each operation may proceed without altering a position of the raw material of the case, and as a result, a manufacturing time for the second intermediate material 10" may be reduced, a manufacturing cost may be lowered, and a production tolerance may also be minimized. That is, the overall manufacturing time of the case 10 may be shortened, the manufacturing cost may be reduced, and the production tolerance may also be reduced.

Referring to FIG. 5 and FIG. 9, the second side of the second intermediate material 10" may have a first surface 1111 facing the accommodation space 11 (see FIG. 6) and a second surface 1113 opposite to the first surface 1111. The sub hole 1133 may extend through the first surface 1111 and the second surface 1113.

The coupling operation (S1150) may include an operation of spacing the first electrode terminal 150 apart on the second surface 1113 of the second side of the second intermediate material 10", an operation of injecting the first connecting member 170 in the molten state between the first electrode terminal 150 and the second surface 1113 through the sub hole 1133 of the second intermediate material 10", and an operation of solidifying the first connecting member 170 in the molten state. By the coupling operation (S1150), the second intermediate material 10" may be manufactured into the case 10.

In the coupling operation (S1150), the first electrode terminal 150 may be positioned at a certain distance apart on the second side of the second intermediate material 10" using a moving device 6. For example, the first electrode terminal 150 and the second surface 1113 on the second side of the case 10 may not be in contact with each other.

After positioning of the first electrode terminal 150 is completed, the first connecting member 170 in the molten state may be injected between the first electrode terminal 150 and the second surface 1113 through an injection device 7 introduced from a first side of the second intermediate material 10". The first connecting member 170 in the molten state may be injected through the sub hole 1133 of the second intermediate material 10". An injection direction may be from the first surface 1111 toward the second surface 1113.

The first connecting member 170 injected through the sub hole 1133 of the second intermediate member 10" may have a wide contact area with respect to the first electrode terminal 150 and the second surface 1113. When there are multiple of the sub hole 1133, the first connecting member 170 may be injected at more diverse points than when there is one of the sub hole 1133.

When the first connecting member 170 is solidified, the first electrode terminal 150 and the second surface 1113 may be fixed while being spaced apart. The first connecting member 170 may prevent direct contact between the first electrode terminal 150 and the second surface 1113. In addition, the first connecting member 170 may have an insulating property to prevent an electrical short circuit between the first electrode terminal 150 and the base portion 110 (see FIG. 3). The first connecting member 170 may be made of polyphenylene sulfide (PPS).

By way of summation and review, in manufacturing a case, the case needs to be manufactured with opposite sides open. Typically, the case is first processed by a deep drawing method in which a metal is placed on a die and then pressed with a punch, and a case processed by the above method has a shape in which only one side is open.

Accordingly, in order to manufacture a case with open sides, an additional process of cutting off a closed side of the case is required. The cutting process not only increases manufacturing time, but also results in loss of raw materials as the cut metal parts are disposed of as waste. Furthermore, if a follow-up process is added to smooth or evenly finish the cut portion, the manufacturing process may become more complex, increasing manufacturing time and cost.

Additionally, a method of coupling separately manufactured electrode cap assembly to open cases on opposite sides increases production tolerances. Accordingly, the adhesion may be reduced due to a dimensional deviation at a bonding area, which may lead to serious performance degradation due to a characteristic of rechargeable batteries that require airtightness.

Additionally, the coupling process of the case and electrode cap assembly may apply heat and pressure to the coupling point, which may result in potential defects or thermal deformation issues that may be additional quality deterioration factors. Such defects or deformations may not only reduce durability of rechargeable batteries, but may also cause long-term stability problems, thereby damaging product reliability.

In contrast, the manufacturing method for the rechargeable battery according to the embodiment of the present invention may reduce a manufacturing time and prevent material waste by omitting the cutting process in manufacturing the case 10. In addition, it may be possible to solve a problem caused by having to manufacture the first electrode cap assembly separately. For example, it may be possible to resolve a problem of not being able to provide a complete sealing force when coupled to the case due to the production tolerance of the first electrode cap assembly.

According to the present invention, the cutting process and subsequent processes in case manufacturing may be omitted, thereby reducing the time and cost for manufacturing a rechargeable battery.

According to the present invention, reliability of a rechargeable battery may be improved.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A manufacturing method for a rechargeable battery (1), the manufacturing method comprising:
manufacturing a case (10) having an opening on a first side;
inserting an electrode assembly (30) into the case (10) through the opening; and
coupling a cap assembly (50) to the first side,
wherein manufacturing the case (10) comprises:
manufacturing a first intermediate material (10') having an internal accommodation space (11) and an open first side;
manufacturing a second intermediate material (10") by forming a plurality of holes (1130) on a second side opposite to the first side of the first intermediate material (10'); and
coupling a first electrode terminal (150) to the second side of the second intermediate material (10").

2. The manufacturing method as claimed in claim 1, wherein manufacturing the first intermediate material (10') includes:
inserting a case raw material into a first die (2), and
applying pressure with a first punch (3, 3'),
optionally wherein manufacturing the first intermediate material (10') includes performing a deep drawing method.

3. The manufacturing method as claimed in claim 1 or 2, wherein manufacturing the second intermediate material (10") includes:
fixing the first intermediate material (10') to a second die (4), and
pressing the second side of the first intermediate material (10') with a second punch (5) including a plurality of protrusions (51), optionally wherein sizes of the plurality of protrusions (51) correspond to sizes of the plurality of holes (1130).

4. The manufacturing method as claimed in any of the preceding claims, wherein forming the plurality of holes (1130) comprises forming:
a main hole (1131); and
a sub hole (1133) positioned near the main hole (1131),
optionally wherein a size of the main hole (1131) is greater than a size of the sub hole (1133).

5. The manufacturing method as claimed in claim 4, wherein:
the sub hole (1133) comprises multiple sub holes (1133), and
the multiple sub holes (1133) are arranged in a radial direction based on the main hole (1131).

6. The manufacturing method as claimed in any of the preceding claims, wherein the plurality of holes (1130) further comprise an electrolyte injection port (1135).

7. The manufacturing method as claimed in any of the preceding claims, wherein manufacturing the first intermediate material (10') and manufacturing the second intermediate material (10") are performed together.

8. The manufacturing method as claimed in any of the claims 2 to 7, wherein applying pressure with the first punch (3') includes applying pressure with the first punch (3') having a plurality of protrusions (31').

9. The manufacturing method as claimed in any of the preceding claims, wherein:
the second side of the second intermediate material (10") has a first surface facing the accommodation space (11) and a second surface opposite to the first surface, and
coupling the first electrode terminal (150) comprises:
positioning the first electrode terminal (150) spaced apart on the second surface;
injecting a molten first connecting member (170) between the first electrode terminal (150) and the second surface through the sub hole (1133); and
solidifying the molten first connecting member (170).

10. The manufacturing method as claimed in claim 9, wherein injecting the molten first connecting member (170) comprises injecting the molten first connecting member (170) in a direction from the first surface toward the second surface through an injection device (7) introduced from a first side of the second intermediate material (10").

11. The manufacturing method as claimed in any of the preceding claims, wherein:
inserting the electrode assembly (30) comprises inserting the electrode assembly (30) having a stack structure with a separator (350) between a first electrode (310) and a second electrode (330), and
the electrode assembly (30) comprises:
a first electrode tab (320) and a second electrode tab (340) respectively protruding from the first electrode (310) and the second electrode (330); and
a first current collector plate (360) and a second current collector plate (370) electrically connected to the first electrode tab (320) and the second electrode tab (340), respectively,
optionally wherein inserting the electrode assembly (30) comprises inserting the electrode assembly (30) into the case (10) such that the second current collector plate (370) faces the first side of the case (10).

12. A rechargeable battery (1), comprising:
a case (10) having an opening on a first side;
an electrode assembly (30) in the case (10) through the opening, the electrode assembly (30) including a first electrode (310), a second electrode (330), and a separator (350) between the first electrode (310) and the second electrode (330); and
a cap assembly (50) coupled to the first side,
wherein the case (10) comprises:
a base portion (110) on a second side opposite to the first side, the base portion (110) having a main hole (1131);
an extension (130) extending in a direction toward a second side of the case (10) from an edge of the base portion (110);
a first electrode terminal (150) on the base portion (110); and
a first connecting member (170) between the first electrode terminal (150) and the base portion (110).

13. The rechargeable battery (1) as claimed in claim 12, wherein the first connecting member (170) has an electrical insulation property, optionally wherein the first connecting member (170) comprises polyphenylene sulfide.

14. The rechargeable battery (1) as claimed in claim 12 or 13, wherein:
the base portion (110) and the extension (130) are a single unit,
the cap assembly (50) comprises a second electrode terminal (550), and
the extension (130) and the cap assembly (50) are connected by a weld.

15. The rechargeable battery (1) as claimed in any of the claims 12 to 14, wherein the electrode assembly (30) further comprises:
a plurality of first electrode tabs (320) electrically connected to the first electrode (310), the plurality of first electrode tabs (320) protruding toward the base portion (110);
a first current collector plate (360) electrically connected to the plurality of first electrode tabs (320);
a plurality of second electrode tabs (340) electrically connected to the second electrode (330), the plurality of second electrode tabs (340) protruding toward the cap assembly (50); and
a second current collector plate (370) electrically connected to the plurality of second electrode tabs (340), the first current collector plate (360) being electrically connected to the first electrode terminal (150) through the main hole (1131).
